(19) Europäisches Patentamt
European Patent Office
Office européen des brevets

(11) **EP 4 310 582 A1**

(12) **EUROPEAN PATENT APPLICATION**

(43) Date of publication:
**24.01.2024 Bulletin 2024/04**

(21) Application number: **22185783.2**

(22) Date of filing: **19.07.2022**

(51) International Patent Classification (IPC):
***G02F 1/01*** *(2006.01)*      ***G02B 6/12*** *(2006.01)*

(52) Cooperative Patent Classification (CPC):
**G02F 1/0126; G02F 1/0147**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ASML Netherlands B.V.**
**5500 AH Veldhoven (NL)**

(72) Inventor: **AKBULUT, Duygu**
**5500 AH Veldhoven (NL)**

(74) Representative: **ASML Netherlands B.V.**
**Corporate Intellectual Property**
**P.O. Box 324**
**5500 AH Veldhoven (NL)**

(54) **SYSTEMS AND METHODS FOR MODIFYING AND TRAINING NEUROMORPHIC PHOTONIC CIRCUITS**

(57)    A system configured for modifying an optical circuit is described. A radiation source is configured to adjust characteristics of radiation pulses. Shaping optics are configured to receive the radiation pulses from the radiation source and direct the radiation pulses toward one or more portions of the optical circuit to modify a refractive index of the one or more portions of the optical circuit. A processor is configured to, based on an output signal from the optical circuit, control (1) the radiation source to adjust the characteristics of the radiation pulses; (2) control the shaping optics, and/or (3) control a positioner supporting the optical circuit to direct the radiation pulses toward the one or more portions of the optical circuit, to modify the refractive index of the one or more portions of the optical circuit such that the output signal matches a target output signal.

**FIG. 1**

**Description**

TECHNICAL FIELD

This description relates to systems and methods for modifying and training optical circuits such as neuromorphic photonic circuits.

BACKGROUND

Neural networks are known. Typically, neural networks are implemented electronically via software. As an example, a typical neural network may be based on a large collection of neural units (or artificial neurons). The neural network may loosely mimic the manner in which a biological brain works (e.g., via large clusters of biological neurons connected by axons). Each neural unit of a neural network may be electronically connected with many other neural units of the neural network. Such connections can be enforcing or inhibitory in their effect on the activation state of connected neural units. Each individual neural unit may have a summation function that combines the values of all its inputs together. Each connection (or the neural unit itself) may have a threshold function such that a signal must surpass the threshold before it is allowed to propagate to other neural units. These neural network systems may be self-learning and trained, rather than explicitly programmed, and can perform significantly better in certain areas of problem solving, as compared to traditional computer programs.

Typically, software based neural networks are trained using a set of training data (e.g., ground truths). The training data may include a set of training samples. Each sample may be a pair comprising an input object (typically a vector, which may be called a feature vector) and a desired output value (also called the supervisory signal). A training algorithm analyzes the training data and electronically adjusts the behavior of the neural network by adjusting the parameters (e.g., weights of one or more layers) of the neural network based on the training data.

Neuromorphic photonic circuits are also known. Neuromorphic photonic circuits comprise neural networks implemented in photonic integrated circuits (e.g., formed as a physical chip with various light pipes and/or other waveguiding structures). Inference (as would be performed by a traditional software based neural network) is achieved by propagation of light in the photonic integrated circuit.

SUMMARY

A photonic integrated circuit is an optical system implemented on a chip. When a certain input signal is sent to the photonic integrated circuit, a certain output signal is obtained from the circuit. The relation between the input and output optical signals is deterministic, here we refer to this relation as the transfer function of the photonic circuit. Methods used to adapt the transfer function of a photonic circuit (or otherwise train a photonic circuit in a way that corresponds to the training of a traditional software based neural network) include volatile methods such as using devices that can shift the refractive index of certain portions of waveguiding structures in a photonic integrated circuit as a function of temperature, strain, or free carriers in the waveguiding structures. These methods often require an electrical signal to be applied as long as a circuit is operational, leading to large energy consumption, heat dissipation, cross talk, and a need to add additional electrical connections to the circuit.

The transfer function of a photonic circuit can also be permanently changed post-fabrication by changing the refractive index of the waveguides or the claddings on the waveguides using methods such as ion implantation and annealing or patterning the cladding material post-fabrication to get a desired effective refractive index. These methods result in a permanent change to the transfer function and are not easily reversible.

In contrast, the present systems and methods are configured for modifying the transfer functions of optical circuits such as neuromorphic photonic circuits in a reversible and non-volatile way. The physical mechanism to be utilized for this purpose is by incorporating in the photonic circuit a material whose refractive index can be changed in a reversible and non-volatile way in response to an external stimuli, e.g. heat caused by radiation, and modifying the refractive index of this material with external stimuli in the desired way to reconfigure the transfer function of the circuit. A group of such materials whose refractive index can be changed with external stimuli in reversible and non-volatile way are phase change materials and are compatible with use in photonic integrated circuits.

Modifying the transfer functions may comprise training the neuromorphic photonic circuits, for example, corresponding to the way a traditional software based neural network would be trained. The present systems and methods include and/or utilize a radiation source with tunable output power, beam shaping optics, a stage to position a photonic integrated circuit, and an algorithm used to monitor how much the transfer function of a photonic integrated circuit has been tuned, and in turn to program the power level of the radiation output and spatial illumination profile of the radiation illuminating the desired portions of the photonic integrated circuit to modify those portions of the photonic integrated circuit.

According to an embodiment, a system configured for modifying an optical circuit is provided. The system comprises a radiation system configured to generate and direct radiation toward one or more portions of the optical circuit to modify one or more optical properties of the one or more portions of the optical circuit. The radiation system is adjustable to configure one or more characteristics of the radiation. The system comprises one or more processors configured by machine readable instructions to control the radiation system to adjust the radiation to configure the one or more characteristics, and direct the radiation toward the one or more portions of the optical circuit. These operations may be performed to modify the one or more optical properties of the one or more portions of the optical circuit based on a target output signal and/or such that the output signal matches a target output signal.

In some embodiments, the one or more optical properties comprise complex refractive indices of one or more materials.

In some embodiments, the radiation comprises radiation pulses, and the one or more characteristics of the radiation comprise intensities, pulse lengths, pulse repetition rate, polarization, and/or wavelengths of the radiation pulses.

In some embodiments, the radiation system comprises a radiation source configured to generate the radiation; and shaping optics configured to receive the radiation from the radiation source and direct the radiation toward the one or more portions of the optical circuit.

In some embodiments, the system comprises a positioner configured to support the optical circuit and move the optical circuit such that the one or more portions of the optical circuit receive the radiation.

In some embodiments, the one or more processors are configured to control the radiation source to adjust the intensities, pulse lengths, pulse repetition rate, polarization, and/or wavelengths of the radiation pulses. The one or more processors may control the shaping optics and/or the positioner to direct the radiation pulses toward the one or more portions of the optical circuit. These operations may be configured to modify the one or more optical properties of the one or more portions of the optical circuit such that an output signal from the optical circuit matches a target output signal.

In some embodiments, the optical circuit is a neuromorphic photonic circuit. In some embodiments, the neuromorphic photonic circuit comprises an integrated optical body with a grid of optical pathways having the one or more portions, the one or more portions located at or near intersections of two or more optical pathways. In some embodiments, the optical pathways comprise waveguides. In some embodiments, the one or more portions of the optical circuit comprise phase change materials configured to shift from fully or partially amorphous to fully or partially crystalline, or fully or partially crystalline to fully or partially amorphous, microstructural phases responsive to receiving directed radiation pulses from the radiation system.

In some embodiments, the radiation system comprises a radiation source configured to generate radiation pulses, the radiation source is a laser light source, and the radiation pulses are laser light pulses.

In some embodiments, the system comprises an input conduit configured to provide an input (e.g., optical) signal to the optical circuit; and an output conduit configured to receive the output (e.g., optical) signal from the optical circuit and provide the output signal to the one or more processors. In some embodiments, the input and output conduits comprise optical fibers.

In some embodiments, an input optical fiber is configured to send the input signal to the optical circuit. A response of the optical circuit is determined by the one or more processors based on the output signal carried by an output optical fiber. The response is determined such that the output signal and/or a deviation of the output signal from the target output signal relative to the input signal is configured to be used as a feedback signal by the one or more processors to monitor a change in a response of the optical circuit. The change in response of the optical circuit is achieved by changes of refractive indices of desired portions of the optical circuit.

In some embodiments, the one or more processors are configured to determine a radiation illumination pattern for the one or more portions of the optical circuit by monitoring an individual output signal from the optical circuit relative to a known corresponding individual input signal and tuning the illumination pattern until target individual output signals are obtained. In some embodiments, the one or more processors are configured to determine a radiation illumination pattern for the one or more portions of the optical circuit by minimizing a cost function associated with differences between measured individual output signals and the target individual output signals, so that the optical circuit is trained and is ready for subsequent inference steps.

In some embodiments, the one or more processors are configured to determine a radiation illumination pattern for the one or more portions of the optical circuit based on an electronic model of the optical circuit.

In some embodiments, the system comprises a photodetector array configured to receive the output signal via an output conduit, and convert the output signal into a corresponding electrical signal for the one or more processors.

In some embodiments, the system comprises a positioner configured to support the optical circuit. The positioner comprises a motorized stage configured to move in an X, Y, Z, Rx, Ry, and/or Rz direction.

In some embodiments, the optical circuit is passive, having no moving parts or electrically controlled components.

In some embodiments, the radiation system comprises beam shaping optics. The beam shaping optics comprise one or more lenses, a diffractive optical component, a spatial light modulator, a digital micromirror device, a scanning mirror, and/or one or more other mirrors, with the mirrors being movable to displace a beam on the photonic circuit. In some embodiments, the beam shaping optics direct the radiation pulses toward the one or more portions of the optical circuit such that radiation pulses heat portions of the optical circuit to modify a refractive index of the one or more portions of the optical circuit.

In some embodiments, relatively short and relatively intense radiation pulses that cause the one or more portions to heat and cool relatively quickly are configured to cause the one or more portions of the optical circuit to shift from crystalline to amorphous; and relatively long and relatively less intense radiation pulses that cause the one or more portions to heat and cool relatively slowly are configured to cause the one or more portions to shift from amorphous to crystalline.

In some embodiments, the one or more portions of the optical circuit comprise a phase change material whose refractive index is adjustable with light. In some embodiments, the phase change material is Sb2Se3, Sb2S3 and/or Ge2Sb2Te5 or another type of chalcogenide phase change material that can be switched between amorphous and crystalline states in response to light and has a different refractive index in amorphous and crystalline states.

In some embodiments, the target output signal comprises an expected output signal, or an acceptable output signal range.

In some embodiments, the radiation system comprises an array of diodes configured to be individually driven by the one or more processors to have different output radiation characteristics which result in different concurrent modifications to the one or more optical properties of different ones of one or more portions of the optical circuit.

According to another embodiment, there is provided a method for modifying an optical circuit. The method comprises generating and directing, with a radiation system, radiation toward one or more portions of the optical circuit to modify one or more optical properties of the one or more portions of the optical circuit. The radiation system is adjustable to configure one or more characteristics of the radiation. The method comprises controlling, with one or more processors configured by machine readable instructions, based on an output signal from the optical circuit, the radiation system to adjust the radiation to configure the one or more characteristics, and direct the radiation toward the one or more portions of the optical circuit. This is configured to modify the one or more optical properties of the one or more portions of the optical circuit such that the output signal matches a target output signal.

According to another embodiment, a neuromorphic photonic circuit is provided. The neuromorphic photonic circuit comprises an integrated optical body with a grid of optical pathways. The neuromorphic photonic circuit comprises one or more portions with a modifiable refractive index. The one or more portions are located at or near intersections of two or more optical pathways. One or more processors are configured to control, based on an output signal from the circuit, a radiation source to adjust intensities, pulse lengths, pulse repetition rate, polarization, and/or wavelengths of radiation pulses directed at the one or more portions. The one or more processors are configured to control shaping optics and/or a positioner supporting the optical circuit to direct the radiation pulses toward the one or more portions of the circuit. These operations are configured to modify the refractive index of the one or more portions of the circuit such that the output signal matches a target output signal.

According to another embodiment, there is provided a system configured for modifying an optical circuit. The system comprises a radiation source configured to generate radiation. The radiation is adjustable to configure one or more characteristics of the radiation pulses. The radiation source is configured to adjust intensities, pulse lengths, pulse repetition rate, polarization, and/or wavelengths of the radiation pulses. The system comprises shaping optics configured to receive the radiation pulses from the radiation source and direct the radiation pulses toward one or more portions of the optical circuit. These operations are configured to modify a refractive index of the one or more portions of the optical circuit. The system comprises a positioner configured to support the optical circuit and move the optical circuit such that the one or more portions of the optical circuit receive the radiation pulses. The system comprises one or more processors configured by machine readable instructions to, based on an output signal from the optical circuit, control the radiation source to adjust the intensities, pulse lengths, pulse repetition rate, polarization, and/or wavelengths of the radiation pulses. The one or more processors are configured to control the shaping optics and/or the positioner to direct the radiation pulses toward the one or more portions of the optical circuit. These operations are configured to modify the refractive index of the one or more portions of the optical circuit such that the output signal matches a target output signal.

BRIEF DESCRIPTION OF THE DRAWINGS

The above aspects and other aspects and features will become apparent to those ordinarily skilled in the art upon review of the following description of specific embodiments in conjunction with the accompanying figures.

Fig. 1 illustrates a system for modifying an optical circuit, according to an embodiment.
Fig. 2 schematically illustrates an illumination profile on an example matrix-vector multiplication circuit, according to an embodiment.
Fig. 3 illustrates a method for modifying, and/or otherwise training, an optical circuit, according to an embodiment.
Fig. 4 schematically depicts a lithography apparatus, according to an embodiment.

Fig. 5 schematically depicts an embodiment of a lithographic cell or cluster, according to an embodiment.

Fig. 6 illustrates a schematic representation of holistic lithography, representing a cooperation between three technologies to optimize semiconductor processing, according to an embodiment.

Fig. 7 illustrates an exemplary flow chart for simulating lithography in a lithographic projection apparatus using one or more trained optical circuits such as neuromorphic photonic circuits, according to an embodiment.

Fig. 8 is a block diagram of an example computer system, according to an embodiment.

DETAILED DESCRIPTION

An optical tool for modifying and/or otherwise training optical circuits such as neuromorphic photonic circuits post fabrication is described. Neuromorphic photonics is an emerging technology that promises low energy and fast inference using light. In neuromorphic photonics, neural networks are implemented in photonic integrated circuits. Inference is achieved by propagation of light in the circuit.

Photonics is well suited for linear operations such as matrix vector multiplications that are heavily used in neural networks. In matrix vector multiplication, the matrix is essentially the transfer matrix of a portion of the photonic circuit and the vector is the input to the circuit. Different types of architectures to implement a desired transfer matrix are known, e.g., using an array of tunable Mach-Zehnder interferometers, microring resonator weight banks, or a cross-bar array with varying absorption levels at junctions.

The present systems and methods are configured to implement a transfer matrix in such a way that it can be changed after fabrication. There are multiple reasons for wanting or needing to change a transfer matrix after fabrication. Two possible examples include (1) a desired transfer matrix not being implemented as designed because of manufacturing tolerances (thus requiring fine tuning); and (2) the neural network formed by the photonic integrated circuit may need to be (re)trained during its lifetime to make different types of inferences.

Often, phase or amplitude modulators are implemented in the circuits to achieve this adaptability. As described above, methods used to adapt the transfer function of a photonic circuit (or otherwise train a photonic circuit in a way that corresponds to the training of a traditional software based neural network) include volatile methods such as using devices that can shift the refractive index of certain portions of waveguiding structures in a photonic integrated circuit as a function of temperature, strain, or free carriers in the waveguiding structures. These methods often require an electrical signal to be applied as long as the circuit is operational, leading to large energy consumption, heat dissipation, cross talk, and a need to add additional electrical connections to the circuit. Such additional connections have the disadvantage of complicating the fabrication process, and product packaging, for example.

In contrast, the systems and methods described below are configured for modifying the transfer functions of optical circuits such as neuromorphic photonic circuits in a reversible and non-volatile way. Modifying the transfer functions may comprise training the neuromorphic photonic circuits, for example, corresponding to the way a traditional software based neural network would be trained. The present systems and methods include and/or utilize a radiation source with tunable output power, beam shaping optics, a stage to position a photonic integrated circuit, and an algorithm used to monitor how much the transfer function of a photonic integrated circuit has been tuned, and in turn to program the power level of the radiation output and spatial illumination profile of the radiation illuminating the desired portions of the photonic integrated circuit to modify those portions of the photonic integrated circuit.

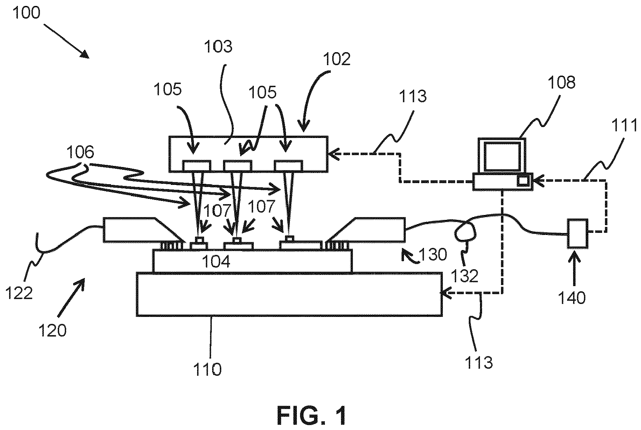

Fig. 1 illustrates a system 100 for modifying an optical circuit 104. Optical circuit 104 may be a fabricated neuromorphic photonic circuit, and/or other optical circuits, for example. Modifying the neuromorphic photonic circuit (post fabrication) may comprise training the neuromorphic photonic circuit (e.g., to function similar to the way a traditional software based neural network would function). System 100 may be used for training the neuromorphic photonic circuit and/or for other purposes. System 100 comprises a radiation system 102, a computer system 108, a positioner 110, an input conduit 120, an output conduit 130, a photodetector array 140, and/or other components.

Radiation system 102 is configured to generate and direct radiation 106 toward one or more portions 107 of optical circuit 104 to modify one or more optical properties of one or more portions 107 of optical circuit 104. Optical circuit 104 is passive, having no moving parts or electrically controlled components. Optical circuit 104 may be a neuromorphic photonic circuit, for example, as described above. The neuromorphic photonic circuit may comprise an integrated optical body with a grid of optical pathways having one or more portions 107. The optical pathways may be waveguides, for example. One or more portions 107 may be located at or near intersections of two or more optical pathways and/or in other locations. One or more portions 107 of optical circuit 104 may comprise phase change materials configured to shift from fully or partially amorphous to fully or partially crystalline, or fully or partially crystalline to fully or partially amorphous, microstructural phases responsive to receiving directed radiation from radiation system 102.

The one or more optical properties of one or more portions 107 comprise complex refractive indices of one or more materials of optical circuit 104, and/or other optical properties. A complex refractive index, $\tilde{n} = n + ik$ comprises both the real part, n and the imaginary part, k of a refractive index. Other optical properties, like transmission, absorption, the phase accumulated by the light wave as it propagates in the medium etc., can be derived from the complex refractive index.

In some embodiments, one or more portions 107 of optical circuit 104 comprise a phase change material that can be changed between its amorphous and crystalline states, having different optical properties. The change between the amorphous and crystalline states can be realized by heating and cooling the material at different timescales using light (e.g., radiation such as laser radiation and/or other light radiation). In some embodiments, the phase change material is Sb2Se3, Sb2S3, Ge2Sb2Te5 and/or another type of chalcogenide phase change material that can be switched between amorphous and crystalline states in response to light and has a different refractive index in amorphous and crystalline states.

In some embodiments, system 100 may be configured to only tune (tuning is described in more detail below) the real part of the refractive index while keeping the imaginary part close to 0 in order to modulate only the phase of light propagating through optical circuit 104, and not the amplitude, i.e., be able to control the phase accumulated as light propagates in optical circuit 104 without losing a significant amount of light. For the purpose of tuning only the real part of the refractive index, the phase change material may be SbSe3, for example. This material has been shown to display a contrast of $\Delta n=0.77$ between its crystalline and amorphous phases, while having very low loss with imaginary part of the refractive index, $k<10^{-5}$ at -1550 nm wavelength, which is a wavelength that is often used in integrated photonics due to the use of this wavelength in telecommunications.

While tuning the real part of the refractive index may be preferred for many applications, tuning the imaginary part, or a combination of the real and imaginary parts of the refractive index can be preferred for other applications where the amplitude of the light is to be modulated in the photonic circuit. For that reason, system 100 is also configured to use a range of possible phase change materials with different tuning properties. Ge2Sb2Te5 (GST) shows a large difference between the amorphous and crystalline states for both the real and imaginary parts of its refractive index, for example.

Radiation system 102 is adjustable to configure one or more characteristics of radiation 106. In some embodiments, radiation 106 comprises radiation pulses. The one or more characteristics of radiation 106 comprise intensities, pulse lengths, pulse repetition rate, polarization, and/or wavelengths of the radiation pulses, and/or other characteristics. Radiation system 102 comprises a radiation source 103 configured to generate radiation 106 (e.g., the radiation pulses), shaping optics 105 configured to receive radiation 106 from radiation source 103 and direct radiation 106 toward one or more portions 107 of optical circuit 104, and/or other components.

In some embodiments, radiation source 103 is a laser light source, and the radiation pulses are laser light pulses. In some embodiments, beam shaping optics 105 comprise one or more lenses, a diffractive optical component, a spatial light modulator, a digital micromirror device, a scanning mirror and/or one or more other mirrors, with the mirrors being movable to displace a beam on the optical circuit, and/or other components. Beam shaping optics 105 direct the radiation pulses from radiation source 103 toward one or more portions 107 of optical circuit 104. Directed radiation pulses heat portions 107 of optical circuit 104 to modify a refractive index and/or other optical properties of one or more portions 107 of optical circuit 104. Relatively short and relatively intense radiation pulses that cause one or more portions 107 to heat and cool relatively quickly are configured to cause one or more portions 107 of optical circuit 104 to shift from crystalline to amorphous. Relatively long and relatively less intense radiation pulses that cause one or more portions 107 to heat and cool relatively slowly are configured to cause one or more portions 107 to shift from amorphous to crystalline.

For example, to induce a phase change in a phase change material with radiation, the radiation needs to raise the temperature of the phase change material above its phase transition temperature by absorption of radiation in the material. In some embodiments, radiation source 103 comprises a pulsed laser with a tunable pulse duration and/or tunable pulse repetition rate, and a wavelength of laser radiation configured to be absorbed by the phase change material. SbSe3 has a phase transition temperature of 200°C and both phases of this material (e.g., amorphous and crystalline) absorb radiation with wavelengths below 800 nm. Thus, if SbSe3 is used as the phase change material, radiation pulses in the visible and/or ultraviolet (UV) range can be used to induce phase transition in SbSe3. For example, a pulsed laser operating at 638 nm, with a 90 mW laser output, along with a 400 ns pulse width may be used to change SbSe3 from crystalline to amorphous phase, and a 100 ms pulse width may be used to change SbSe3 from amorphous to crystalline. These numbers are examples only, and can be changed for radiation with a different operating wavelength, to reduce the power output of radiation source 103, to maximize the lifetime of the phase change material, to fine tune a percentage of amorphous and crystalline phases of the phase change material at a certain portion 107 of optical circuit 104, and/or for other reasons.

The characteristics of the radiation pulses used to induce a phase change in a phase change material also depend on the type of phase change material. For example, radiation source 103 may comprise a pulsed laser operating at 660 nm with a tunable pulse duration and power used to induce a phase change in GST. Radiation pulses may have a pulse width of 40 ns with a peak power of 160 mW for amorphization, and a pulse width of 400 ns with a peak power of 50 mW for crystallization, for example.

Shaping optics 105 are configured to ensure that portions 107 of optical circuit 104 where refractive index changes are desired get illuminated with radiation at appropriate intensity levels. In some embodiments, a single transfer function for a single photonic integrated circuit (optical circuit 104) with phase change materials deposited at known and fixed locations (one or more portions 107) is used and not changed during the entire operation of optical circuit 104. In these embodiments, shaping optics 105 may generate a fixed radiation pattern for optical circuit 104. In these embodiments, beam shaping optics 105 which generate the same spatial pattern of radiation at the circuit level can be utilized. In these embodiments, beam shaping optics 105 may comprise a custom designed diffractive optics element in the beam path, for example. Also for example, these embodiments apply when training information is stored at a server, and necessary weights are written to a circuit once.

In some embodiments, beam shaping optics 105 may be configured for a range of optical circuits 104, where the spatial positions of the phase change materials on the circuits can vary. In these embodiments, shaping optics 105 may comprise a spatial light modulator (SLM) - e.g., a digital micromirror device (DMD) - to generate a range of optical patterns in a field of view that matches the particular layout of a circuit to be tuned (e.g., as described herein). In these embodiments, beam shaping optics 105 are configured to generate a complex radiation pattern on an optical circuit 104 to ensure that portions 107 of optical circuit 104 where a refractive index change is desired are illuminated with the required radiation power levels. These embodiments may apply when training information is stored at a server, and necessary weights are written to a circuit once; and/or when training is performed via system hardware, for example.

In some embodiments, beam shaping optics 105 are configured to generate a relatively simple beam shape, which may comprise a single focused beam on optical circuit 104. In these embodiments, the beam can be scanned over the surface of optical circuit 104 using a twodimensional scan mirror, or by moving positioner 110, where optical circuit 104 is placed, and the radiation power can be adapted independently at each position where a change in refractive index of a phase change material is required. The scan-mirror or moving-stage approach can withstand higher power levels than a DMD, for example.

In some embodiments, the use of shaped beams may enable a system 100 design where the entire optical circuit 104 is coated with a phase change material layer so that patterning of the phase change material on optical circuit 104 is unnecessary.

In some embodiments, radiation system 102 comprises an array of diodes configured to be individually driven (e.g., by one or more processors) to have different output radiation characteristics which result in different concurrent modifications to the one or more optical properties of different ones of one or more portions of optical circuit 104. For example, beam shaping optics 105 may include an (2D) array of diodes. These may be laser and/or other light emitting diodes. A pulse sequence, intensity, etc. of radiation emitted by each individual (e.g., laser) diode may be adjusted to create a spatial pattern of light to program optical circuit 104. These diodes may replace the SLM described above, for example. This may make the present system more compact, and/or have other advantages.

Positioner 110 is configured to support and/or move optical circuit 104 such that one or more portions 107 of optical circuit 104 receive radiation 106. Positioner 110 may comprise one or more pins, tables, chucks, clips, clamps, and/or other components configured to support and/or otherwise hold optical circuit 104. Positioner 110 is generally located in the path of radiation 106. Positioner 110 may be configured to move in multiple dimensions by translating, tilting, rotating, and/or moving in other ways. In some embodiments, positioner 110 comprises a motorized stage configured to translate in an X, Y, and/or Z direction; and/or rotate in an Rx, Ry, and/or Rz direction, for example.

Computer system 108 (e.g., one or more processors of computer system 108) is configured to control radiation system 102 (e.g., including radiation source 103 and/or shaping optics 105) and/or positioner 110 to adjust radiation 106 and/or move optical circuit 104 to configure the one or more characteristics of radiation 106, and direct radiation 106 toward one or more portions 107 of optical circuit 104. In some embodiments, the position of optical circuit 104 and/or one or more portions 107 with respect to the illumination pattern generated with beam shaping optics 105 can be deduced using an additional imaging system such as a microscope and/or other devices (not shown in Fig. 1).

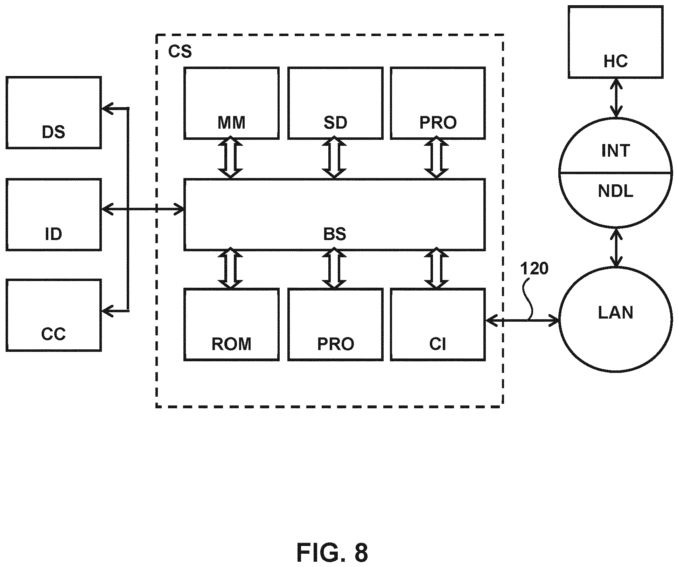

Radiation 106 is configured to modify the one or more optical properties of one or more portions 107 of optical circuit 104. The modification is performed based on a target output signal and/or such that an output signal from optical circuit 104 matches a target output signal, for example. This may comprise tuning, for example. The target output signal may comprise an expected output signal, an acceptable output signal range, and/or other target output signal. The controlling is performed with one or more processors of computer system 108 configured by machine readable instructions based on the output signal from the optical circuit and/or other information (see Fig. 8 and computer system CS described below for further explanation related to the one or more processors).

Input conduit 120 is configured to provide an input (e.g., optical) signal to optical circuit 104. The input signal may be generated using a separate light source and phase and amplitude modulation system, which may be controlled by computer system 108, for example, and/or come from other sources. Output conduit 130 is configured to receive an output (e.g., optical) signal from optical circuit 104, and provide the output signal to photodetector array 140 and/or the one or more processors of computer system 108. Photodetector array 140 is configured to receive the output signal via output conduit 130, and convert the output signal into a corresponding electrical signal 111 for the one or more processors and/or computer system 108.

Input and output conduits 120 and 130 may comprise optical fibers, 122 and 132 respectively, for example, fiber arrays, or in general a form of light guide. In some embodiments, input optical fiber 122 is configured to send the input (e.g., optical) signal to optical circuit 104, and a response of optical circuit 104 is determined by the one or more processors based on the output (e.g., optical) signal carried by output optical fiber 132 such that the output optical signal and/or a deviation of the output optical signal from the target output signal relative to the input optical signal is configured to be used as a feedback signal by the one or more processors (of computer system 108) to monitor an extent of refractive index changes of desired portions 107 of optical circuit 104. Computer system 108 is configured to generate a control signal 113 for controlling radiation system 102 and/or positioner 110 based on the feedback signal and/or other information.

By way of a non-limiting example, input conduit 120 and output conduit 130 are used to send signals to, and read output signals from, optical circuit 104. While tuning the transfer function of optical circuit 104, an input signal can be sent to optical circuit 104 via input optical fiber 122 and the response of optical circuit 104 can be measured by the signal read from output optical fiber 132. This output signal (or its deviation from the desired output signal in response to an input signal) can be used as the feedback signal to monitor how far the refractive index of one or more portions 107 of optical circuit 104 is tuned. The feedback signal is fed to computer system 108 to monitor the tuning of the refractive index in the circuit via an algorithm. The algorithm can in turn control radiation source 103 output power and beam shaping optics 105 to send radiation to specific ones of portions 107 of optical circuit 104 with desired power levels, and once a desired correction level has been reached, computer system 108 can cause radiation source 103 to turn the radiation off, for example.

In some embodiments, computer system 108 (e.g., via the one or more processors) is configured to determine a radiation illumination pattern for one or more portions 107 of optical circuit 104 based on an electronic model of optical circuit 104. For example, computer system 108 and/or another computing device may be configured to simulate optical circuit 104 (e.g., a photonic neuromorphic circuit). A simulation training routine may provide the required weights of the photonic neuromorphic circuit as its output. Then, computer system 108 can directly write the weights to the photonic neuromorphic circuit by modifying the refractive index at various locations using the operations and system 100 components described above.

In some embodiments, computer system 108 (e.g., via the one or more processors) is configured to generate a radiation illumination pattern (by controlling radiation system 102 which includes radiation source 103 and beam shaping optics 105) for one or more portions 107 of optical circuit 104. The radiation illumination pattern may be generated by monitoring an individual output signal from optical circuit 104 relative to a known corresponding individual input signal. The illumination pattern may be tuned until target individual output signals are obtained. In some embodiments, computer system 108 (e.g., via the one or more processors) is configured to generate the radiation illumination pattern by minimizing a cost function associated with differences between measured individual output signals and the target individual output signals. In other words, system 100 is configured for training optical circuit 104 directly, utilizing a neural network training algorithm, while monitoring the output signals as a function of the weights (which are implemented by the refractive index changes) in the neural network.

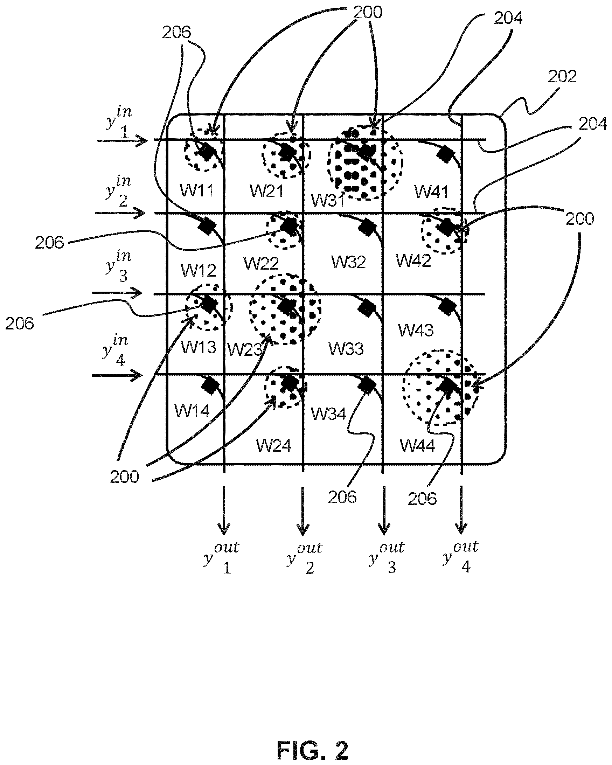

For example, Fig. 2 schematically illustrates an illumination profile 200 on an example matrix-vector multiplication circuit 202. In order to tune the refractive index (e.g., modify optical circuit 104 as described above) by an appropriate amount, system 100 (Fig. 1) is configured to monitor how much the refractive index has been tuned, and if the desired tuning has been achieved. For photonic neuromorphic circuits, system 100 is configured to monitor the output of the photonic neuromorphic circuit (e.g., optical circuit 104 shown in Fig. 1) in response to known input signals, and determine a difference between a desired output and the observed output as an error signal to be minimized while tuning the refractive indices (e.g., as described above).

As described, the present system is configured to tune the optical transfer function of the circuit by tuning the refractive indices at various parts of the circuit while monitoring the optical output in response to known inputs. In some embodiments, it can be beneficial to add an extra metrology system, such as an imaging ellipsometry system or an interferometry system to monitor the refractive index change in parts of the circuit during the tuning of the refractive indices or to simply monitor the change in reflectivity from the circuit with an additional optical imaging system.

In Fig. 2, lines 204 (which form a grid in this example) are waveguides and squares 206 are portions (e.g., portions 107 shown in Fig. 1) comprising phase change materials. Illumination in illumination profile 200 is shaped to illuminate the phase change materials. In some embodiments, an appropriate illumination profile 200 can be determined by monitoring the output $y_k^{out}$ (for $y_{1...k}$, pathways through different possible waveguides) in response to known inputs $y_k^{in}$ (for $y_{1...k}$) and tuning illumination profile 200 until appropriate $y_k^{out}$ are obtained. In some embodiments, an appropriate illumination profile 200 can be determined by minimizing a cost function such as

$$\sum_{k=1}^{4}\left|y_k^{out} - y_k^{out,ideal}\right| \text{ or } \sum_{k=1}^{4}\left|y_k^{out} - y_k^{out,ideal}\right|^2$$

or another function of the difference between ideal and observed output signals, by tuning illumination profile 200 (where $y_k^{out,ideal}$ represents a target output and/or target output range). During the training, the cost function would be calculated for all input-output pairs in the training set and an average cost function would be calculated. In Fig. 2, the W's stand for the weights in the photonic neural network. They are determined by the optical properties of the phase change materials. The architecture in Fig. 2 is shown for illustrative purposes, and can be generalized to other matrix-vector multiplication architectures used in neuromorphic photonic circuits. Note that a circuit for an entire network may be more complex than a single matrix-vector multiplication unit (as shown in Fig. 2), and may comprise an order of M*N*N phase change materials (e.g., in portions 107 shown in Fig. 1) to be tuned, where M is a number of layers (of optical circuit 104 shown in Fig. 1), and N * N is the size of the matrices in each matrix-vector multiplication unit.

Waveguides comprise light guiding structures in the optical circuit (e.g., optical circuit 104 described herein). In some embodiments, the waveguides (sometimes termed optical waveguides) confine and/or otherwise guide light, for example, based on total internal reflection. Also, some shapes inside a chip may not be explained by total internal reflection only, and may require a solution of a wave equation to describe how light propagates.

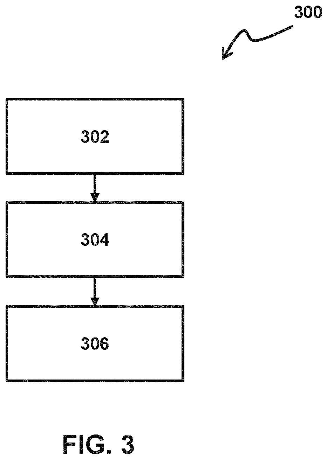

Fig. 3 illustrates a method 300 for modifying an optical circuit. Method 300 may be and/or include a method for training a neuromorphic photonic circuit, as described below. In some embodiments, one or more operations of method 300 may be implemented in or by system 100 illustrated in Fig. 1, a computer system (e.g., as illustrated in Fig. 8 and described below), and/or in or by other systems, for example. In some embodiments, method 300 comprises generating and directing (operation 302) radiation toward one or more portions of the optical circuit, supporting and moving (operation 304) the optical circuit such that the one or more portions of the optical circuit receive the radiation, and adjusting (operation 306) the radiation and/or the location of the optical circuit to direct the radiation toward the one or more portions of the optical circuit. These and/or other operations may be performed to modify the one or more optical properties of the one or more portions of the optical circuit based on a target output signal and/or such that an output signal from the optical circuit matches a target output signal, for example.

The operations of method 300 are intended to be illustrative. In some embodiments, method 300 may be accomplished with one or more additional operations not described, and/or without one or more of the operations discussed. Additionally, the order in which the operations of method 300 are illustrated in Fig. 3 and described herein is not intended to be limiting.

In some embodiments, one or more portions of method 300 may be implemented in and/or controlled by one or more processing devices (e.g., a digital processor, an analog processor, a digital circuit designed to process information, an analog circuit designed to process information, a state machine, and/or other mechanisms for electronically processing information). The processing devices may be or be included in a computer system such as a desktop computer, a laptop computer, a smartphone, a server, and/or other computing devices, for example. The one or more processing devices may include one or more devices executing some or all of the operations of method 300 in response to instructions stored electronically on an electronic storage medium. The one or more processing devices may include one or more devices configured through hardware, firmware, and/or software to be specifically designed for execution of one or more of the operations of method 300.

At operation 302, radiation is generated and directed, with a radiation system, toward one or more portions of the optical circuit. This is configured to modify one or more optical properties of the one or more portions of the optical circuit. The one or more optical properties comprise complex refractive indices of one or more materials of the optical circuit

The radiation system is adjustable to configure one or more characteristics of the radiation. In some embodiments, the radiation comprises radiation pulses. The one or more characteristics of the radiation comprise intensities, pulse lengths, pulse repetition rate, polarization, and/or wavelengths of the radiation pulses. The radiation system comprises a radiation source configured to generate the radiation, shaping optics configured to receive the radiation from the radiation source and direct the radiation toward the one or more portions of the optical circuit, and/or other components.

In some embodiments, the radiation system comprises a radiation source configured to generate radiation pulses. The radiation source is a laser light source. The radiation pulses are laser light pulses. In some embodiments, the radiation system comprises beam shaping optics. The beam shaping optics comprise one or more lenses, a diffractive optical component, a spatial light modulator, a digital micromirror device, a scanning mirror, and/or one or more other mirrors, with the mirrors being movable to displace a beam on the optical circuit. The beam shaping optics direct the radiation pulses toward the one or more portions of the optical circuit such that radiation pulses heat portions of the optical circuit to modify a refractive index of the one or more portions of the optical circuit. Relatively short and relatively intense radiation pulses that cause the one or more portions to heat and cool relatively quickly are configured to cause the one or more portions of the optical circuit to shift from crystalline to amorphous; and relatively long and relatively less intense radiation pulses that cause the one or more portions to heat and cool relatively slowly are configured to cause the one or more portions to shift from amorphous to crystalline.

The optical circuit is passive, having no moving parts or electrically controlled components. The optical circuit may be a neuromorphic photonic circuit, for example. The neuromorphic photonic circuit may comprise an integrated optical body with a grid of optical pathways. The optical pathways may be waveguides, for example. One or more portions of the optical circuit may comprise phase change materials configured to shift from fully or partially amorphous to fully or partially crystalline, or fully or partially crystalline to fully or partially amorphous, microstructural phases responsive to receiving directed radiation pulses from the radiation system. In some embodiments, the one or more portions of the optical circuit comprise a phase change material whose refractive index is adjustable with light. In some embodiments, the phase change material is $Sb_2Se_3$, $Sb_2S_3$ and/or $Ge_2Sb_2Te_5$ or another type of chalcogenide phase change material that can be switched between amorphous and crystalline states in response to light and has a different refractive index in amorphous and crystalline states. In some embodiments, operation 302 is performed by a radiation system similar to and/or the same as radiation system 102 shown in Fig. 1.

At operation 304, the optical circuit is supported and/or moved, with a positioner, such that the one or more portions of the optical circuit receive the radiation. In some embodiments, the positioner comprises a motorized stage configured to move in an X, Y, Z, Rx, Ry, and/or Rz direction. In some embodiments, operation 304 is performed by a positioner similar to and/or the same as positioner 110 shown in Fig. 1.

At operation 306, the radiation system (e.g., including the radiation source and/or the shaping optics) and/or the positioner are controlled to adjust the radiation and/or move the optical circuit to configure the one or more characteristics of the radiation. The radiation system is configured to direct the radiation toward the one or more portions of the optical circuit. These operations are configured to modify the one or more optical properties of the one or more portions of the optical circuit such that an output signal from the optical circuit matches a target output signal. The target output signal may comprise an expected output signal, an acceptable output signal range, and/or other target output signal. The controlling is performed with one or more processors configured by machine readable instructions based on the output signal from the optical circuit and/or other information. In some embodiments, operation 306 is performed by a computer system comprising one or more such processors similar to and/or the same as computer system 108 shown in Fig. 1.

In some embodiments, operation 306 comprises providing, with an input conduit (e.g., input conduit 120 shown in Fig. 1), an input (e.g., optical) signal to the optical circuit (e.g., optical circuit 104 shown in Fig. 1). Operation 306 comprises receiving, with an output conduit (e.g., output conduit 130 shown in Fig. 1), the output (e.g., optical) signal from the optical circuit, and providing the output signal to the one or more processors (e.g., computer system 108 shown in Fig. 1) with the output conduit. The input and output conduits may comprise optical fibers, for example. In some embodiments, an input optical fiber is configured to send the input optical signal to the optical circuit, and a response of the optical circuit is determined by the one or more processors based on the output optical signal carried by an output optical fiber. The output optical signal and/or a deviation of the output optical signal from the target output signal relative to the input optical signal is configured to be used as a feedback signal by the one or more processors to monitor an extent of refractive index changes of desired portions of the optical circuit. In some embodiments, operation 306 comprises receiving, with a photodetector array (e.g., array 140 shown in Fig. 1), the output signal via an output conduit, and converting the output signal into a corresponding electrical signal for the one or more processors.

In some embodiments, operation 306 comprises determining, with the one or more processors, a radiation illumination pattern for the one or more portions of the optical circuit. The radiation illumination pattern is determined by monitoring an individual output signal from the optical circuit relative to a known corresponding individual input signal and tuning the illumination pattern until target individual output signals are obtained. In some embodiments, the illumination pattern is determined by minimizing a cost function associated with differences between measured individual output signals and the target individual output signals. In some embodiments, operation 306 comprises determining, with the one or more processors, a radiation illumination pattern for the one or more portions of the optical circuit based on an electronic model of the optical circuit.

Trained neuromorphic photonic circuits, and/or systems and methods for training such circuits (e.g., as described above) have a multitude of potential applications. One such potential application is in semiconductor manufacturing. The description below relates to semiconductor device manufacturing and patterning processes, which may use one or more of the neuromorphic photonic circuits, the systems, and/or the methods described above. For example, one or more trained neuromorphic photonic circuits (e.g., optical circuit 104 shown in Fig. 1) may be used instead of a traditional software based neural network for lithography simulation and/or modeling, and/or other purposes.

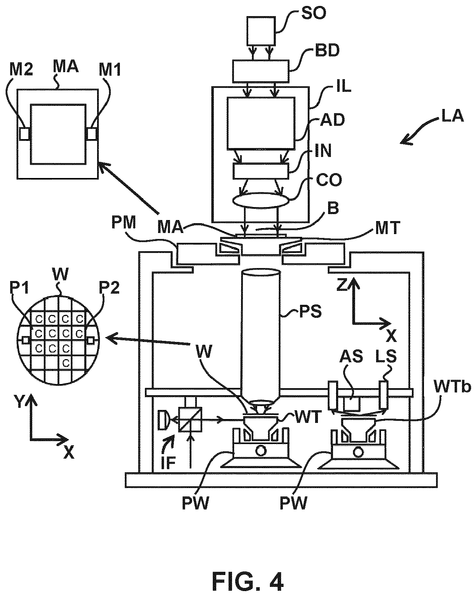

Fig. 4 schematically depicts an embodiment of a lithographic apparatus LA. Lithographic apparatus LA is different than system 100 (Fig. 1) described above, with a different source, positioner, etc., but may have similar components that perform similar functions (e.g., generating and directing radiation with a certain pattern onto a substrate). The apparatus LA comprises an illumination system (illuminator) IL configured to condition a radiation beam B (e.g. UV radiation, DUV radiation, or EUV radiation); a support structure (e.g. a mask table) MT constructed to support a patterning device (e.g. a mask) MA and connected to a first positioner PM configured to accurately position the patterning device in accordance with certain parameters; a substrate table (e.g. a wafer table) WT (e.g., WTa, WTb or both) configured to hold a substrate (e.g. a resist-coated wafer) W and coupled to a second positioner PW configured to accurately position the substrate in accordance with certain parameters; and a projection system (e.g. a refractive projection lens system) PS configured to project a pattern imparted to the radiation beam B by patterning device MA onto a target portion C (e.g. comprising one or more dies and often referred to as fields) of the substrate W. The projection system is supported on a reference frame RF. As depicted, the apparatus is of a transmissive type (e.g. employing a transmissive mask). Alternatively, the apparatus may be of a reflective type (e.g. employing a programmable mirror array, or employing a reflective mask).

The illuminator IL receives a beam of radiation from a radiation source SO. The source and the lithographic apparatus may be separate entities, for example when the source is an excimer laser. In such cases, the source is not considered to form part of the lithographic apparatus and the radiation beam is passed from the source SO to the illuminator IL with the aid of a beam delivery system BD comprising for example suitable directing mirrors and/or a beam expander. In other cases, the source may be an integral part of the apparatus, for example when the source is a mercury lamp. The source SO and the illuminator IL, together with the beam delivery system BD if required, may be referred to as a radiation system (e.g., which may have similar components as radiation system 102 described above and shown in Fig. 1).

The illuminator IL may alter the intensity distribution of the beam. The illuminator may be arranged to limit the radial extent of the radiation beam such that the intensity distribution is non-zero within an annular region in a pupil plane of the illuminator IL. Additionally or alternatively, the illuminator IL may be operable to limit the distribution of the beam in the pupil plane such that the intensity distribution is non-zero in a plurality of equally spaced sectors in the pupil plane. The intensity distribution of the radiation beam in a pupil plane of the illuminator IL may be referred to as an illumination mode.

The illuminator IL may comprise adjuster AD configured to adjust the (angular / spatial) intensity distribution of the beam. Generally, at least the outer and/or inner radial extent (commonly referred to as α-outer and α-inner, respectively) of the intensity distribution in a pupil plane of the illuminator can be adjusted. The illuminator IL may be operable to vary the angular distribution of the beam. For example, the illuminator may be operable to alter the number, and angular extent, of sectors in the pupil plane wherein the intensity distribution is non-zero. By adjusting the intensity distribution of the beam in the pupil plane of the illuminator, different illumination modes may be achieved. For example, by limiting the radial and angular extent of the intensity distribution in the pupil plane of the illuminator IL, the intensity distribution may have a multi-pole distribution such as, for example, a dipole, quadrupole or hexapole distribution. A desired illumination mode may be obtained, e.g., by inserting an optic which provides that illumination mode into the illuminator IL or using a spatial light modulator.

The illuminator IL may be operable to alter the polarization of the beam and may be operable to adjust the polarization using adjuster AD. The polarization state of the radiation beam across a pupil plane of the illuminator IL may be referred to as a polarization mode. The use of different polarization modes may allow greater contrast to be achieved in the image formed on the substrate W. The radiation beam may be unpolarized. Alternatively, the illuminator may be arranged to linearly polarize the radiation beam. The polarization direction of the radiation beam may vary across a pupil plane of the illuminator IL. The polarization direction of radiation may be different in different regions in the pupil plane of the illuminator IL. The polarization state of the radiation may be chosen in dependence on the illumination mode. For multi-pole illumination modes, the polarization of each pole of the radiation beam may be generally perpendicular to the position vector of that pole in the pupil plane of the illuminator IL. For example, for a dipole illumination mode, the radiation may be linearly polarized in a direction that is substantially perpendicular to a line that bisects the two opposing sectors of the dipole. The radiation beam may be polarized in one of two different orthogonal directions, which may be referred to as X-polarized and Y-polarized states. For a quadrupole illumination mode, the radiation in the sector of each pole may be linearly polarized in a direction that is substantially perpendicular to a line that bisects that sector. This polarization mode may be referred to as XY polarization. Similarly, for a hexapole illumination mode the radiation in the sector of each pole may be linearly polarized in a direction that is substantially perpendicular to a line that bisects that sector. This polarization mode may be referred to as TE polarization.

In addition, the illuminator IL generally comprises various other components, such as an integrator IN and a condenser CO. The illumination system may include various types of optical components, such as refractive, reflective, magnetic, electromagnetic, electrostatic, or other types of optical components, or any combination thereof, for directing, shaping, or controlling radiation. Thus, the illuminator provides a conditioned beam of radiation B, having a desired uniformity and intensity distribution in its cross section.

The support structure MT supports the patterning device in a manner that depends on the orientation of the patterning device, the design of the lithographic apparatus, and other conditions, such as for example whether or not the patterning device is held in a vacuum environment. The support structure may use mechanical, vacuum, electrostatic or other clamping techniques to hold the patterning device. The support structure may be a frame or a table, for example, which may be fixed or movable as required. The support structure may ensure that the patterning device is at a desired position, for example with respect to the projection system. Any use of the terms "reticle" or "mask" herein may be considered synonymous with the more general term "patterning device."

A patterning device may be transmissive or reflective. Examples of patterning devices include masks, programmable mirror arrays, and programmable LCD panels. Masks are well known in lithography, and include mask types such as binary, alternating phase-shift, and attenuated phase-shift, as well as various hybrid mask types. An example of a programmable mirror array employs a matrix arrangement of small mirrors, each of which can be individually tilted to reflect an incoming radiation beam in different directions. The tilted mirrors impart a pattern in a radiation beam, which is reflected by the mirror matrix.

The projection system PS may comprise a plurality of optical (e.g., lens) elements and may further comprise an adjustment mechanism configured to adjust one or more of the optical elements to correct for aberrations (phase variations across the pupil plane throughout the field). To achieve this, the adjustment mechanism may be operable to manipulate one or more optical (e.g., lens) elements within the projection system PS in one or more different ways. The projection system may have a coordinate system wherein its optical axis extends in the z direction. The adjustment mechanism may be operable to do any combination of the following: displace one or more optical elements; tilt one or more optical elements; and/or deform one or more optical elements. Displacement of an optical element may be in any direction (x, y, z, or a combination thereof). Tilting of an optical element is typically out of a plane perpendicular to the optical axis, by rotating about an axis in the x and/or y directions although a rotation about the z axis may be used for a non-rotationally symmetric aspherical optical element. Deformation of an optical element may include a low frequency shape (e.g. astigmatic) and/or a high frequency shape (e.g. free form aspheres). Deformation of an optical element may be performed for example by using one or more actuators to exert force on one or more sides of the optical element and/or by using one or more heating elements to heat one or more selected regions of the optical element. In general, it may not be possible to adjust the projection system PS to correct for apodization (transmission variation across the pupil plane). The transmission map of a projection system PS may be used when designing a patterning device (e.g., mask) MA for the lithography apparatus LA. Using a computational lithography technique, the patterning device MA may be designed to at least partially correct for apodization.

The lithographic apparatus may be of a type having two (dual stage) or more tables (e.g., two or more substrate tables WTa, WTb, two or more patterning device tables, a substrate table WTa and a table WTb below the projection system without a substrate that is dedicated to, for example, facilitating measurement, and/or cleaning, etc.). In such "multiple stage" machines, the additional tables may be used in parallel, or preparatory steps may be conducted on one or more tables while one or more other tables are being used for exposure. For example, alignment measurements using an alignment sensor AS and/or level (height, tilt, etc.) measurements using a level sensor LS may be made.

In operation of the lithographic apparatus LA, a radiation beam is conditioned and provided by the illumination system IL. The radiation beam B is incident on the patterning device (e.g., mask) MA, which is held on the support structure (e.g., mask table) MT, and is patterned by the patterning device. Having traversed the patterning device MA, the radiation beam B passes through the projection system PS, which focuses the beam onto a target portion C of the substrate W. With the aid of the second positioner PW and position sensor IF (e.g. an interferometric device, linear encoder, 2-D encoder, or capacitive sensor), the substrate table WT can be moved accurately, e.g. to position different target portions C in the path of the radiation beam B. Similarly, the first positioner PM and another position sensor (which is not explicitly depicted in Fig. 4) can be used to accurately position the patterning device MA with respect to the path of the radiation beam B, e.g. after mechanical retrieval from a mask library, or during a scan. In general, movement of the support structure MT may be realized with the aid of a long-stroke module (coarse positioning) and a short-stroke module (fine positioning), which form part of the first positioner PM. Similarly, movement of the substrate table WT may be realized using a long-stroke module and a short-stroke module, which form part of the second positioner PW. In the case of a stepper (as opposed to a scanner), the support structure MT may be connected to a short-stroke actuator only, or may be fixed. Patterning device MA and substrate W may be aligned using patterning device alignment marks M1, M2 and substrate alignment marks PI, P2. Although the substrate alignment marks as illustrated occupy dedicated target portions, they may be located in spaces between target portions (these are known as scribe-lane alignment marks). Similarly, in situations in which more than one die is provided on the patterning device MA, the patterning device alignment marks may be located between the dies.

The substrate may be processed, before or after exposure, in for example a track (a tool that typically applies a layer of resist to a substrate and develops the exposed resist) or a metrology or inspection tool. Where applicable, the disclosure herein may be applied to such and other substrate processing tools. Further, the substrate may be processed more than once, for example in order to create a multi-layer IC, so that the term substrate used herein may also refer to a substrate that already includes multiple processed layers.

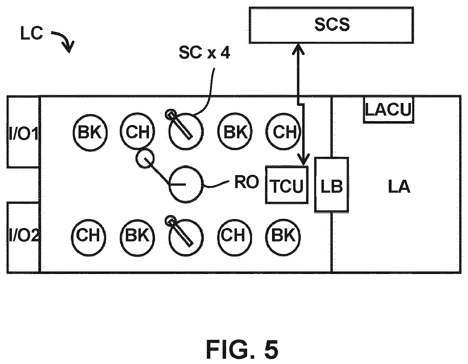

As shown in Fig. 5, the lithographic apparatus LA may form part of a lithographic cell LC, also sometimes referred to a lithocell or cluster, which also includes apparatuses to perform pre- and post-exposure processes on a substrate. Conventionally these include one or more spin coaters SC to deposit one or more resist layers, one or more developers to develop exposed resist, one or more chill plates CH and/or one or more bake plates BK. A substrate handler, or robot, RO picks up one or more substrates from input/output port I/O1, 1/02, moves them between the different process apparatuses and delivers them to the loading bay LB of the lithographic apparatus. These apparatuses, which are often collectively referred to as the track, are under the control of a track control unit TCU which is itself controlled by the supervisory control system SCS, which also controls the lithographic apparatus via lithography control unit LACU. Thus, the different apparatuses can be operated to maximize throughput and processing efficiency.

In order that a substrate that is exposed by the lithographic apparatus is exposed correctly and consistently and/or in order to monitor a part of the patterning process (e.g., a device manufacturing process) that includes at least one pattern transfer step (e.g., an optical lithography step), it is desirable to inspect a substrate or other object to measure or determine one or more properties such as alignment, overlay (which can be, for example, between structures in overlying layers or between structures in a same layer that have been provided separately to the layer by, for example, a double patterning process), line thickness, critical dimension (CD), focus offset, a material property, etc. Accordingly, a manufacturing facility in which lithocell LC is located also typically includes a metrology system that measures some or all of the substrates W (Fig. 1) that have been processed in the lithocell or other objects in the lithocell. The metrology system may be part of the lithocell LC, for example it may be part of the lithographic apparatus LA (such as alignment sensor AS (Fig. 1)).

In a device fabrication process (e.g., a patterning process or a lithography process), a substrate or other objects may be subjected to various types of measurement during or after the process. The measurement may determine whether a particular substrate is defective, may establish adjustments to the process and apparatuses used in the process (e.g., aligning two layers on the substrate or aligning the patterning device to the substrate), may measure the performance of the process and the apparatuses, or may be for other purposes. Examples of measurement include optical imaging (e.g., optical microscope), non-imaging optical measurement (e.g., measurement based on diffraction), mechanical measurement (e.g., profiling using a stylus, atomic force microscopy (AFM)), and/or non-optical imaging (e.g., scanning electron microscopy (SEM)).

Metrology results may be provided directly or indirectly to the supervisory control system SCS. If an error is detected, an adjustment may be made to exposure of a subsequent substrate (especially if the inspection can be done soon and fast enough that one or more other substrates of the batch are still to be exposed) and/or to subsequent exposure of the exposed substrate. Also, an already exposed substrate may be stripped and reworked to improve yield, or discarded, thereby avoiding performing further processing on a substrate known to be faulty. In a case where only some target portions of a substrate are faulty, further exposures may be performed only on those target portions which meet specifications. Other manufacturing process adjustments are contemplated.

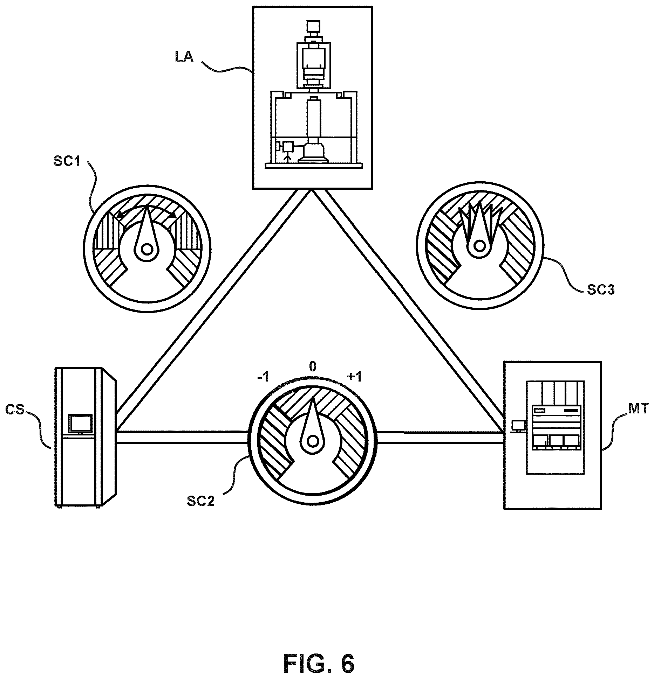

Fig. 6 depicts a schematic representation of holistic lithography, representing a cooperation between three technologies to optimize semiconductor processing. Typically, the patterning process in a lithographic apparatus LA is one of the most critical steps in the processing which requires high accuracy of dimensioning and placement of structures on the substrate. To ensure this high accuracy, three systems (in this example) may be combined in a so called "holistic" control environment as schematically depicted in Fig. 6. One of these systems is the lithographic apparatus LA which is (virtually) connected to a metrology apparatus (e.g., a metrology tool) MT (a second system), and to a computer system CS (a third system). A "holistic" environment may be configured to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific processing process yields a defined result (e.g. a functional semiconductor device) - typically within which the process parameters in the lithographic process or patterning process are allowed to vary.

The computer system CS may use a design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). The optical circuit (e.g., the neuromorphic photonic circuit) described above may be used for such simulations, for example. Typically, the resolution enhancement techniques are arranged to match the patterning possibilities of the lithographic apparatus LA. The computer system CS may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology apparatus (tool) MT may provide input to the computer system CS to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequent measurements of the structures created, e.g., for process control and verification. Tools to make such measurements include metrology tool (apparatus) MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements.

It is often desirable to be able to computationally determine how a patterning process would produce a desired pattern on a substrate. Computational determination may comprise simulation, for example. Such simulations may utilize one or more of the optical circuits (e.g., the neuromorphic photonic circuits) described above. Simulations may be provided for one or more parts of the processing process. For example, it is desirable to be able to simulate the lithography process of transferring the patterning device pattern onto a resist layer of a substrate as well as the yielded pattern in that resist layer after development of the resist, simulate metrology operations such as the determination of overlay, and/or perform other simulations. The objective of a simulation may be to accurately predict, for example, metrology metrics (e.g., overlay, a critical dimension, a reconstruction of a three dimensional profile of features of a substrate, a dose or focus of a lithography apparatus at a moment when the features of the substrate were printed with the lithography apparatus, etc.), processing process parameters (e.g., edge placements, aerial image intensity slopes, sub resolution assist features (SRAF), etc.), and/or other information which can then be used to determine whether an intended or target design has been achieved.

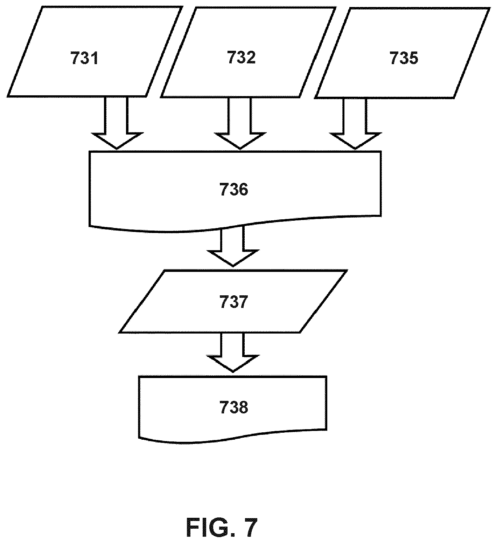

An exemplary flow chart for simulating lithography is illustrated in Fig. 7. An illumination model 731 represents optical characteristics (including radiation intensity distribution and/or phase distribution) of the illumination. A projection optics model 732 represents optical characteristics (including changes to the radiation intensity distribution and/or the phase distribution caused by the projection optics) of the projection optics. A design layout model 735 represents optical characteristics (including changes to the radiation intensity distribution and/or the phase distribution caused by a given design layout) of a design layout, which is the representation of an arrangement of features on or formed by a patterning device. An aerial image 736 can be simulated using the illumination model 731, the projection optics model 732, and the design layout model 735. A resist image 738 can be simulated from the aerial image 736 using a resist model 737. Mask images, such as a CTM mask and/or other masks, may also be simulated (e.g., by the design layout model 735 and/or other models), for example. Simulation of lithography can, for example, predict contours and/or CDs in the resist image. Simulation and modeling can be used to configure one or more features of a patterning device pattern, one or more features of the illumination (e.g., changing one or more characteristics of a spatial / angular intensity distribution of the illumination, such as change a shape), and/or one or more features of the projection optics (e.g., numerical aperture, etc.).

In some embodiments, illumination model 731, projection optics model 732, design layout model 735, resist model 737, an SMO model, and/or other models associated with and/or included in an integrated circuit manufacturing process may be an empirical model that performs the operations of the method described herein. The empirical model may predict outputs based on correlations between various inputs (e.g., one or more characteristics of a mask or wafer image, one or more characteristics of a design layout, one or more characteristics of the patterning device, one or more characteristics of the illumination used in the lithographic process such as the wavelength, etc.).

As an example, the empirical model may be a machine learning model and/or any other parameterized model. In some embodiments, the machine learning model (for example) may be and/or include mathematical equations, algorithms, plots, charts, networks (e.g., neural networks), and/or other tools and machine learning model components. For example, the machine learning model may be and/or include one or more neural networks having an input layer, an output layer, and one or more intermediate or hidden layers. In some embodiments, the one or more neural networks may be and/or include deep neural networks (e.g., neural networks that have one or more intermediate or hidden layers between the input and output layers). In some embodiments, the one or more neural networks may be formed by one or more of the optical circuits (e.g., one or more of the neuromorphic photonic circuits) described above.

Figure 8 is a diagram of an example computer system CS that may be used for one or more of the operations described herein. Computer system CS may be similar to and/or the same as computer system 108 shown in Fig. 1 and described above. Computer system CS includes a bus BS or other communication mechanism for communicating information, and a processor PRO (or multiple processors similar to and/or the same as the processor(s) described above related to Fig. 1) coupled with bus BS for processing information. Computer system CS also includes a main memory MM, such as a random access memory (RAM) or other dynamic storage device, coupled to bus BS for storing information and instructions to be executed by processor PRO. Main memory MM also may be used for storing temporary variables or other intermediate information during execution of instructions by processor PRO. Computer system CS further includes a read only memory (ROM) ROM or other static storage device coupled to bus BS for storing static information and instructions for processor PRO. A storage device SD, such as a magnetic disk or optical disk, is provided and coupled to bus BS for storing information and instructions.

Computer system CS may be coupled via bus BS to a display DS, such as a flat panel or touch panel display or a cathode ray tube (CRT) for displaying information to a computer user. An input device ID, including alphanumeric and other keys, is coupled to bus BS for communicating information and command selections to processor PRO. Another type of user input device is cursor control CC, such as a mouse, a trackball, or cursor direction keys for communicating direction information and command selections to processor PRO and for controlling cursor movement on display DS. This input device typically has two degrees of freedom in two axes, a first axis (e.g., x) and a second axis (e.g., y), that allows the device to specify positions in a plane. A touch panel (screen) display may also be used as an input device.

In some embodiments, all or some of one or more operations described herein may be performed by computer system CS in response to processor PRO executing one or more sequences of one or more instructions contained in main memory MM. Such instructions may be read into main memory MM from another computer-readable medium, such as storage device SD. Execution of the sequences of instructions included in main memory MM causes processor PRO to perform the process steps (operations) described herein. One or more processors in a multi-processing arrangement may also be employed to execute the sequences of instructions contained in main memory MM. In some embodiments, hard-wired circuitry may be used in place of or in combination with software instructions. Thus, the description herein is not limited to any specific combination of hardware circuitry and software.

The term "computer-readable medium" or "machine-readable medium" as used herein refers to any medium that participates in providing instructions to processor PRO for execution. Such a medium may take many forms, including but not limited to, non-volatile media, volatile media, and transmission media. Non-volatile media include, for example, optical or magnetic disks, such as storage device SD. Volatile media include dynamic memory, such as main memory MM. Transmission media include coaxial cables, copper wire and fiber optics, including the wires that comprise bus BS. Transmission media can also take the form of acoustic or light waves, such as those generated during radio frequency (RF) and infrared (IR) data communications. Computer-readable media can be non-transitory, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge. Non-transitory computer readable media can have instructions recorded thereon. The instructions, when executed by a computer, can implement any of the operations described herein. Transitory computer-readable media can include a carrier wave or other propagating electromagnetic signal, for example.

Various forms of computer readable media may be involved in carrying one or more sequences of one or more instructions to processor PRO for execution. For example, the instructions may initially be borne on a magnetic disk of a remote computer. The remote computer can load the instructions into its dynamic memory and send the instructions over a telephone line using a modem. A modem local to computer system CS can receive the data on the telephone line and use an infrared transmitter to convert the data to an infrared signal. An infrared detector coupled to bus BS can receive the data carried in the infrared signal and place the data on bus BS. Bus BS carries the data to main memory MM, from which processor PRO retrieves and executes the instructions. The instructions received by main memory MM may optionally be stored on storage device SD either before or after execution by processor PRO.

Computer system CS may also include a communication interface CI coupled to bus BS. Communication interface CI provides a two-way data communication coupling to a network link NDL that is connected to a local network LAN. For example, communication interface CI may be an integrated services digital network (ISDN) card or a modem to provide a data communication connection to a corresponding type of telephone line. As another example, communication interface CI may be a local area network (LAN) card to provide a data communication connection to a compatible LAN. Wireless links may also be implemented. In any such implementation, communication interface CI sends and receives electrical, electromagnetic, or optical signals that carry digital data streams representing various types of information.

Network link NDL typically provides data communication through one or more networks to other data devices. For example, network link NDL may provide a connection through local network LAN to a host computer HC. This can include data communication services provided through the worldwide packet data communication network, now commonly referred to as the "Internet" INT. Local network LAN (Internet) may use electrical, electromagnetic, or optical signals that carry digital data streams. The signals through the various networks and the signals on network data link NDL and through communication interface CI, which carry the digital data to and from computer system CS, are exemplary forms of carrier waves transporting the information.

Computer system CS can send messages and receive data, including program code, through the network(s), network data link NDL, and communication interface CI. In the Internet example, host computer HC might transmit a requested code for an application program through Internet INT, network data link NDL, local network LAN, and communication interface CI. One such downloaded application may provide all or part of a method described herein, for example. The received code may be executed by processor PRO as it is received, and/or stored in storage device SD, or other non-volatile storage for later execution. In this manner, computer system CS may obtain application code in the form of a carrier wave.

Various embodiments of the present systems and methods are disclosed in the subsequent list of numbered clauses. In the following, further features, characteristics, and exemplary technical solutions of the present disclosure will be described in terms of clauses that may be optionally claimed in any combination:

1. A system configured for modifying an optical circuit, the system comprising: a radiation system configured to generate and direct radiation toward the optical circuit, the radiation configured to modify one or more optical properties of the optical circuit, the radiation system being adjustable to configure one or more characteristics of the radiation; and one or more processors configured by machine readable instructions to control the radiation system to adjust the radiation to configure the one or more characteristics, and to modify the one or more optical properties of the optical circuit.

2. The system of clause 1, wherein the one or more optical properties comprise complex refractive indices of one or more materials.

3. The system of any of the previous clauses, wherein the radiation comprises radiation pulses, and the one or more characteristics of the radiation comprise intensities, pulse lengths, pulse repetition rate, polarization, and/or wavelengths of the radiation pulses.

4. The system of any of the previous clauses, wherein the radiation system comprises a radiation source configured to generate the radiation; and beam shaping optics configured to receive the radiation from the radiation source and direct the radiation toward one or more portions of the optical circuit.

5. The system of any of the previous clauses, further comprising a positioner configured to support the optical circuit and move the optical circuit such that one or more portions of the optical circuit receive the radiation.

6. The system of any of the previous clauses, wherein the one or more processors are configured to control: the radiation source to adjust the intensities, pulse lengths, pulse repetition rate, polarization, and/or wavelengths of the radiation pulses, and/or the shaping optics and/or the positioner to direct the radiation pulses toward the one or more portions of the optical circuit, to modify the one or more optical properties of the one or more portions of the optical circuit such that an output signal from the optical circuit matches a target output signal.

7. The system of any of the previous clauses, wherein the optical circuit is a neuromorphic photonic circuit.

8. The system of any of the previous clauses, wherein the neuromorphic photonic circuit comprises an integrated optical body with a grid of optical pathways having one or more portions, the one or more portions located at or near intersections of two or more optical pathways.

9. The system of any of the previous clauses, wherein the optical pathways comprise waveguides.

10. The system of any of the previous clauses, wherein the one or more portions of the optical circuit comprise phase change materials configured to shift from fully or partially amorphous to fully or partially crystalline, or fully or partially crystalline to fully or partially amorphous, microstructural phases responsive to receiving directed radiation pulses from the radiation system.

11. The system of any of the previous clauses, wherein the radiation system comprises a radiation source configured to generate radiation pulses, the radiation source is a laser light source, and the radiation pulses are laser light pulses.

12. The system of any of the previous clauses, further comprising an input conduit configured to provide an input signal to the optical circuit; and an output conduit configured to receive an output signal from the optical circuit and provide the output signal to the one or more processors.

13. The system of any of the previous clauses, wherein the input and output conduits comprise optical fibers.

14. The system of any of the previous clauses, wherein an input optical fiber is configured to send the input signal to the optical circuit, and a response of the optical circuit is determined by the one or more processors based on an output signal carried by an output optical fiber such that the output signal and/or a deviation of the output signal from the target output signal relative to the input signal is configured to be used as a feedback signal by the one or more processors to monitor a change in a response of the optical circuit, which is achieved by changes of refractive indices of desired portions of the optical circuit.

15. The system of any of the previous clauses, wherein the one or more processors are configured to determine a radiation illumination pattern for one or more portions of the optical circuit by monitoring an individual output signal from the optical circuit relative to a known corresponding individual input signal and tuning the illumination pattern until target individual output signals are obtained, and/or by minimizing a cost function associated with differences between measured individual output signals and the target individual output signals, so that the optical circuit is trained and is ready for subsequent inference steps.

16. The system of any of the previous clauses, wherein the one or more processors are configured to determine a radiation illumination pattern for one or more portions of the optical circuit based on an electronic model of the optical circuit.

17. The system of any of the previous clauses, further comprising a photodetector array configured to receive an output signal from the optical circuit via an output conduit, and convert the output signal into a corresponding electrical signal for the one or more processors.

18. The system of any of the previous clauses, further comprising a positioner, configured to support the optical circuit, wherein the positioner comprises a motorized stage configured to move in an X, Y, Z, Rx, Ry, and/or Rz direction.

19. The system of any of the previous clauses, wherein the optical circuit is passive, having no moving parts or electrically controlled components.

20. The system of any of the previous clauses, wherein the radiation system comprises beam shaping optics, and the beam shaping optics comprise one or more lenses, a diffractive optical component, a spatial light modulator, a digital micromirror device, a scanning mirror and/or one or more other mirrors, with the mirrors being movable to displace a beam on the optical circuit.

21. The system of any of the previous clauses, wherein the beam shaping optics direct the radiation pulses toward one or more portions of the optical circuit such that radiation pulses heat portions of the optical circuit to modify a refractive index of the one or more portions of the optical circuit.

22. The system of any of the previous clauses, wherein relatively short and relatively intense radiation pulses that cause the one or more portions to heat and cool relatively quickly are configured to cause the one or more portions of the optical circuit to shift from crystalline to amorphous; and relatively long and relatively less intense radiation pulses that cause the one or more portions to heat and cool relatively slowly are configured to cause the one or more portions to shift from amorphous to crystalline.

23. The system of any of the previous clauses, wherein one or more portions of the optical circuit comprise a phase change material whose refractive index is adjustable with light.

24. The system of any of the previous clauses, wherein the phase change material is $Sb_2Se_3$, $Sb_2S_3$ and/or $Ge_2Sb_2Te_5$ or another type of chalcogenide phase change material that can be switched between amorphous and crystalline states in response to light and has a different refractive index in amorphous and crystalline states.

25. The system of any of the previous clauses, wherein a target output signal comprises an expected output signal, or an acceptable output signal range.

26. The system of any of the previous clauses, wherein the radiation system comprises: an array of diodes configured to be individually driven by the one or more processors to have different output radiation characteristics which result in different concurrent modifications to the one or more optical properties of different ones of one or more portions of the optical circuit.

27. A method for modifying an optical circuit, the method comprising: generating and directing, with a radiation system, radiation toward one or more portions of the optical circuit to modify one or more optical properties of the one or more portions of the optical circuit, the radiation system being adjustable to configure one or more characteristics of the radiation; and controlling, with one or more processors configured by machine readable instructions, the radiation system to adjust the radiation to configure the one or more characteristics, and direct the radiation toward the one or more portions of the optical circuit, to modify the one or more optical properties of the one or more portions of the optical circuit.

28. The method of clause 27, wherein the one or more optical properties comprise complex refractive indices of one or more materials.

29. The method of any of the previous clauses, wherein the radiation comprises radiation pulses, and the one or more characteristics of the radiation comprise intensities, pulse lengths, pulse repetition rate, polarization, and/or wavelengths of the radiation pulses.

30. The method of any of the previous clauses, wherein the radiation system comprises a radiation source configured to generate the radiation; and beam shaping optics configured to receive the radiation from the radiation source and direct the radiation toward the one or more portions of the optical circuit.

31. The method of any of the previous clauses, further comprising supporting the optical circuit and moving the optical circuit, with a positioner, such that the one or more portions of the optical circuit receive the radiation.

32. The method of any of the previous clauses, further comprising controlling, with the one or more processors: the radiation source to adjust the intensities, pulse lengths, pulse repetition rate, polarization, and/or wavelengths of the radiation pulses, and/or the shaping optics and/or the positioner to direct the radiation pulses toward the one or more portions of the optical circuit, to modify the one or more optical properties of the one or more portions of the optical circuit such that an output signal from the optical circuit matches a target output signal.

33. The method of any of the previous clauses, wherein the optical circuit is a neuromorphic photonic circuit.

34. The method of any of the previous clauses, wherein the neuromorphic photonic circuit comprises an integrated optical body with a grid of optical pathways having the one or more portions, the one or more portions located at or near intersections of two or more optical pathways.

35. The method of any of the previous clauses, wherein the optical pathways comprise waveguides.

36. The method of any of the previous clauses, wherein the one or more portions of the optical circuit comprise phase change materials configured to shift from fully or partially amorphous to fully or partially crystalline, or fully or partially crystalline to fully or partially amorphous, microstructural phases responsive to receiving directed radiation pulses from the radiation system.

37. The method of any of the previous clauses, wherein the radiation system comprises a radiation source configured to generate radiation pulses, the radiation source is a laser light source, and the radiation pulses are laser light pulses.

38. The method of any of the previous clauses, further comprising providing, with an input conduit, an input signal to the optical circuit; and receiving, with an output conduit, an output signal from the optical circuit, and providing the output signal to the one or more processors with the output conduit.

39. The method of any of the previous clauses, wherein the input and output conduits comprise optical fibers.

40. The method of any of the previous clauses, wherein an input optical fiber is configured to send the input signal to the optical circuit, and a response of the optical circuit is determined by the one or more processors based on an output signal carried by an output optical fiber such that the output signal and/or a deviation of the output signal from the target output signal relative to the input signal is configured to be used as a feedback signal by the one or more processors to monitor an extent of refractive index changes of desired portions of the optical circuit.

41. The method of any of the previous clauses, further comprising determining, with the one or more processors, a radiation illumination pattern for the one or more portions of the optical circuit by monitoring an individual output signal from the optical circuit relative to a known corresponding individual input signal and tuning the illumination pattern until target individual output signals are obtained, and/or by minimizing a cost function associated with differences between measured individual output signals and the target individual output signals, so that the optical circuit is trained and is ready for subsequent inference steps.

42. The method of any of the previous clauses, further comprising determining, with the one or more processors, a radiation illumination pattern for the one or more portions of the optical circuit based on an electronic model of the optical circuit.

43. The method of any of the previous clauses, further comprising receiving, with a photodetector array, an output signal from the optical circuit via an output conduit, and converting the output signal into a corresponding electrical signal for the one or more processors.

44. The method of any of the previous clauses, further comprising supporting the optical circuit with a positioner, wherein the positioner comprises a motorized stage configured to move in an X, Y, Z, Rx, Ry, and/or Rz direction.

45. The method of any of the previous clauses, wherein the optical circuit is passive, having no moving parts or electrically controlled components.

46. The method of any of the previous clauses, wherein the radiation system comprises beam shaping optics, and the beam shaping optics comprise one or more lenses, a diffractive optical component, a spatial light modulator, a digital micromirror device, a scanning mirror and/or one or more other mirrors, with the mirrors being movable to displace a beam on the optical circuit.

47. The method of any of the previous clauses, wherein the beam shaping optics direct the radiation pulses toward the one or more portions of the optical circuit such that radiation pulses heat portions of the optical circuit to modify a refractive index of the one or more portions of the optical circuit.

48. The method of any of the previous clauses, wherein relatively short and relatively intense radiation pulses that cause the one or more portions to heat and cool relatively quickly are configured to cause the one or more portions of the optical circuit to shift from crystalline to amorphous; and relatively long and relatively less intense radiation pulses that cause the one or more portions to heat and cool relatively slowly are configured to cause the one or more portions to shift from amorphous to crystalline.

49. The method of any of the previous clauses, wherein the one or more portions of the optical circuit comprise a phase change material whose refractive index is adjustable with light.

50. The method of any of the previous clauses, wherein the phase change material is $Sb_2Se_3$, $Sb_2S_3$ and/or $Ge_2Sb_2Te_5$ or another type of chalcogenide phase change material that can be switched between amorphous and crystalline states in response to light and has a different refractive index in amorphous and crystalline states.

51. The method of any of the previous clauses, wherein a target output signal comprises an expected output signal, or an acceptable output signal range.

52. The method of any of the previous clauses, wherein the radiation system comprises: an array of diodes configured to be individually driven by the one or more processors to have different output radiation characteristics which result in different concurrent modifications to the one or more optical properties of different ones of one or more portions of the optical circuit.

53. A neuromorphic photonic circuit, comprising: an integrated optical body with a grid of optical pathways; and one or more portions with a modifiable refractive index, the one or more portions located at or near intersections of two or more optical pathways; wherein: one or more processors are configured to control a radiation source to adjust intensities, pulse lengths, pulse repetition rate, polarization, and/or wavelengths of radiation pulses directed at the one or more portions, and/or shaping optics and/or a positioner supporting the circuit to direct the radiation pulses toward the one or more portions of the circuit, to modify the refractive index of the one or more portions of the circuit, with modification of refractive indices continued until the neuromorphic photonic circuit is trained and ready to perform inferences.

54. The circuit of clause 53, wherein the optical pathways comprise waveguides.

55. The circuit of any of the previous clauses, wherein the one or more portions of the circuit comprise phase change materials configured to shift from fully or partially amorphous to fully or partially crystalline, or fully or partially crystalline to fully or partially amorphous, microstructural phases responsive to receiving directed radiation pulses.

56. The circuit of any of the previous clauses, wherein the circuit is passive, having no moving parts or electrically controlled components.

57. The circuit of any of the previous clauses, wherein relatively short and relatively intense radiation pulses that cause the one or more portions to heat and cool relatively quickly are configured to cause the one or more portions of the optical circuit to shift from crystalline to amorphous; and relatively long and relatively less intense radiation pulses that cause the one or more portions to heat and cool relatively slowly are configured to cause the one or more portions to shift from amorphous to crystalline.

58. The circuit of any of the previous clauses, wherein the one or more portions of the circuit comprise a phase change material whose refractive index is adjustable with light.

59. The circuit of any of the previous clauses, wherein the phase change material is Sb2Se3, Sb2S3 and/or Ge2Sb2Te5 or another type of chalcogenide phase change material that can be switched between amorphous and crystalline states in response to light and has a different refractive index in amorphous and crystalline states.

60. A system configured for modifying an optical circuit, the system comprising: a radiation source configured to generate radiation, the radiation being adjustable to configure one or more characteristics of the radiation pulses, the radiation source configured to adjust intensities, pulse lengths, pulse repetition rate, polarization, and/or wavelengths of the radiation pulses; shaping optics configured to receive the radiation pulses from the radiation source and direct the radiation pulses toward one or more portions of the optical circuit to modify a refractive index of the one or more portions of the optical circuit; a positioner configured to support the optical circuit and move the optical circuit such that the one or more portions of the optical circuit receive the radiation pulses; and one or more processors configured by machine readable instructions to, based on an output signal from the optical circuit, control the radiation source to adjust the intensities, pulse lengths, pulse repetition rate, polarization, and/or wavelengths of the radiation pulses, and/or the shaping optics and/or the positioner to direct the radiation pulses toward the one or more portions of the optical circuit, to modify the refractive index of the one or more portions of the optical circuit such that the output signal matches a target output signal.

The descriptions above are intended to be illustrative, not limiting. Thus, it will be apparent to one skilled in the art that modifications may be made as described without departing from the scope of the claims set out below.

**Claims**

1. A system configured for modifying an optical circuit, the system comprising:

    a radiation system configured to generate and direct radiation toward the optical circuit, the radiation configured to modify one or more optical properties of the optical circuit, the radiation system being adjustable to configure one or more characteristics of the radiation; and
    one or more processors configured by machine readable instructions to control the radiation system to adjust the radiation to configure the one or more characteristics, and to modify the one or more optical properties of the optical circuit.

2. The system of claim 1, wherein the one or more optical properties comprise complex refractive indices of one or more materials.

3. The system of claim 1 or 2, wherein the radiation comprises radiation pulses, and the one or more characteristics of the radiation comprise intensities, pulse lengths, pulse repetition rate, polarization, and/or wavelengths of the radiation pulses.

4. The system of any of claims 1-3, wherein the radiation system comprises:

    a radiation source configured to generate the radiation; and
    shaping optics configured to receive the radiation from the radiation source and direct the radiation toward one or more portions of the optical circuit.

5. The system of any of claims 1-4, further comprising a positioner configured to support the optical circuit and move the optical circuit such that one or more portions of the optical circuit receive the radiation.

6. The system of claims 3, 4, and 5, wherein the one or more processors are configured to control:

the radiation source to adjust the intensities, pulse lengths, pulse repetition rate, polarization, and/or wavelengths of the radiation pulses, and/or

the shaping optics and/or the positioner to direct the radiation pulses toward the one or more portions of the optical circuit,

to modify the one or more optical properties of the one or more portions of the optical circuit such that an output signal from the optical circuit matches a target output signal.

7.  The system of any of claims 1-6, wherein the optical circuit is a neuromorphic photonic circuit.

8.  The system of claim 7, wherein the neuromorphic photonic circuit comprises an integrated optical body with a grid of optical pathways having one or more portions, the one or more portions located at or near intersections of two or more optical pathways.

9.  The system of claim 8, wherein the one or more portions of the optical circuit comprise phase change materials configured to shift from fully or partially amorphous to fully or partially crystalline, or fully or partially crystalline to fully or partially amorphous, microstructural phases responsive to receiving directed radiation pulses from the radiation system.

10. The system of any of claims 1-9, wherein the radiation system comprises a radiation source configured to generate radiation pulses, the radiation source is a laser light source, and the radiation pulses are laser light pulses.

11. The system of any of claims 1-10, further comprising an input conduit configured to provide an input signal to the optical circuit; and an output conduit configured to receive an output signal from the optical circuit and provide the output signal to the one or more processors.

12. The system of any of claims 1-11, further comprising a positioner, configured to support the optical circuit, wherein the positioner comprises a motorized stage configured to move in an X, Y, Z, Rx, Ry, and/or Rz direction.

13. The system of any of claims 1-12, wherein the optical circuit is passive, having no moving parts or electrically controlled components.

14. The system of any of claims 1-13, wherein the radiation system comprises beam shaping optics, and the beam shaping optics comprise one or more lenses, a diffractive optical component, a spatial light modulator, a digital micromirror device, a scanning mirror and/or one or more other mirrors, with the mirrors being movable to displace a beam on the optical circuit.

15. A neuromorphic photonic circuit, comprising:

an integrated optical body with a grid of optical pathways; and
one or more portions with a modifiable refractive index, the one or more portions located at or near intersections of two or more optical pathways;
wherein:

one or more processors are configured to control,

a radiation source to adjust intensities, pulse lengths, pulse repetition rate, polarization, and/or wavelengths of radiation pulses directed at the one or more portions, and/or
shaping optics and/or a positioner supporting the circuit to direct the radiation pulses toward the one or more portions of the circuit,

to modify the refractive index of the one or more portions of the circuit, with modification of refractive indices continued until the neuromorphic photonic circuit is trained and ready to perform inferences.

FIG. 1

FIG. 2

300

302

304

306

FIG. 3

FIG. 4

**FIG. 5**

FIG. 6

FIG. 7

FIG. 8

Europäisches
Patentamt

European
Patent Office

Office européen
des brevets

# EUROPEAN SEARCH REPORT

Application Number

EP 22 18 5783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 596 520 A (UNIV BRISTOL [GB]) 5 January 2022 (2022-01-05) | 1-3,5,6, 10,13 | INV. G02F1/01 G02B6/12 |
| Y | * figures 2a, 2b * * claim 16 * | 4,7-9, 11,12, 14,15 | |
| Y | CHANGMING WU ET AL: "Programmable Phase-change Metasurfaces on Waveguides for Multimode Photonic Convolutional Neural Network", ARXIV.ORG, CORNELL UNIVERSITY LIBRARY, 201 OLIN LIBRARY CORNELL UNIVERSITY ITHACA, NY 14853, 22 April 2020 (2020-04-22), XP081715538, * the whole document * | 4,7-9, 11,12, 14,15 | |
| Y | DABOS GEORGE ET AL: "Neuromorphic photonic technologies and architectures: scaling opportunities and performance frontiers [Invited]", OPTICAL MATERIALS EXPRESS, vol. 12, no. 6, 1 June 2022 (2022-06-01), page 2343, XP055966731, US ISSN: 2159-3930, DOI: 10.1364/OME.452138 Retrieved from the Internet: URL:http://dx.doi.org/10.1364/OME.452138> * the whole document * | 4,7-9, 11,12, 14,15 | |
| Y | WANG JIANMIN ET AL: "Overview of Phase-Change Materials Based Photonic Devices", IEEE ACCESS, IEEE, USA, vol. 8, 2 July 2020 (2020-07-02), pages 121211-121245, XP011798168, DOI: 10.1109/ACCESS.2020.3006899 [retrieved on 2020-07-10] * chapter IV * | 4,7-9, 11,12, 14,15 | |

TECHNICAL FIELDS
SEARCHED (IPC)

G02F
G02B

The present search report has been drawn up for all claims

| Place of search | Date of completion of the search | Examiner |
|---|---|---|
| The Hague | 2 January 2023 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 5783

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2023

| Patent document cited in search report | | Publication date | Patent family member(s) | | Publication date |
|---|---|---|---|---|---|
| GB 2596520 | A | 05-01-2022 | GB | 2596520 A | 05-01-2022 |
| | | | WO | 2021260375 A1 | 30-12-2021 |

EPO FORM P0459

For more details about this annex : see Official Journal of the European Patent Office, No. 12/82